Europäisches Patentamt

European Patent Office

Office européen des brevets

(19)

(11) Veröffentlichungsnummer: **0 138 100**
A2

(12) # EUROPÄISCHE PATENTANMELDUNG

(21) Anmeldenummer: **84111342.6**

(22) Anmeldetag: **24.09.84**

(51) Int. Cl.⁴: **C 10 L 5/04, C 21 B 5/00**

(30) Priorität: **30.09.83 DE 3335484**

(43) Veröffentlichungstag der Anmeldung: **24.04.85**
**Patentblatt 85/17**

(84) Benannte Vertragsstaaten: **AT BE CH DE FR GB IT LI LU NL SE**

(71) Anmelder: **C. Deilmann AG, Deilmannstrasse, D-4444 Bad Bentheim (DE)**
Anmelder: **Preussag AG, Leibnizufer 9, D-3000 Hannover 1 (DE)**

(72) Erfinder: **Grumpelt, Heinrich, Dr. Ing. Dipl. Berging, Am Berghang 77, D-4444 Bad Bentheim (DE)**
Erfinder: **Laube, Heinrich, Dipl. Ing., Hoeveringhausener Kirchweg 5, D-4532 Mettingen (DE)**

(74) Vertreter: **Patentanwälte Schulze Horn und Hoffmeister, Goldstrasse 36, D-4400 Münster (DE)**

(54) Verfahren zur Herstellung reaktiver, kohlenstoffreicher Massen oder Körper.

(57) Verfahren zur Herstellung reaktiver, kohlenstoffreicher Massen oder Körper, bei dem eine Ausgangsmasse, die zu einem wesentlichen Teil aus anthrazitischer Steinkohle besteht, unter Bemischung eines Bindemittels vermischt und vermahlen wird und in eine pellitisierte, brikettierte oder dem Verwendungszweck anderweitig angepaßte Form gebracht wird. Die Ausgangsmasse besteht

a) aus einem Anteil von 50–90 Gew.-% anthrazitischer Steinkohle mit einem Gewichtsgehalt an flüchtigen Bestandteilen (waf) $\leq$ 12%,

b) aus einem Anteil von 5–40 Gew.-% an Torfkoks, gegebenenfalls bis zur Hälfte vermischt mit anderen verkohlten organischen Massen, wie Holzkohle, verkohltes Stroh,

c) aus einem Bindemittel in einem für die gewünschte Konsistenz erforderlichen Anteil.

## Verfahren zur Herstellung reaktiver, kohlenstoffreicher Massen oder Körper

Die Erfindung betrifft ein Verfahren zur Herstellung reaktiver, kohlenstoffreicher Massen oder Körper, bei dem eine Ausgangsmasse, die zu einem wesentlichen Teil aus anthrazitischer Steinkohle besteht, unter Beimischung eines Bindemittels vermischt und vermahlen wird und in eine dem Verwendungszweck angepaßte Form gebracht wird.

Unter "reaktiven, kohlenstoffreichen Massen" sollen solche Stoffe verstanden werden, die als Filterkohle, als Aufkohlungsreagenz, als reduzierende Mittel und dergleichen verwendet werden, wie dies im folgenden beschrieben wird. Beispielsweise ist als Filtermaterial für die Aufbereitung von Brauch- und Trinkwässern insbesondere Aktivkohle bekannt. Dieser Stoff wird aus kohlenstoffhaltigem Material nach dessen Aufbereitung durch Schwelen und nachfolgendes Aktivieren hergestellt. Das Aktivieren hat den Zweck, das Kohlegerüst aufzulockern.

Unter anthrazitischen Kohlen werden solche verstanden, die als Magerkohlen, Anthrazite und Meta-Anthrazite bekannt sind. Der Gehalt an flüchtigen Bestandteilen, bezogen auf die wasser- und aschefreie Substanz (waf) beträgt weniger als 12 Gew.-%, während der Kohlenstoffgehalt über 90 Gew.-% liegt (vgl. DIN 23 003).

Bekannt ist aus der DE-AS 1 800 126 die Verwendung aus anthrazitischer Kohle einer Körnung kleiner 0,1 mm und einem festen oder flüssigen, aus einem Kohlederivat bestehenden Bindemittel hergestellten, zwecks gänzlicher oder teilweiser Austreibung der flüchtigen Bestandteile thermisch behandelter Pellets als Filtermaterial für die Aufbereitung von Brauch- und Trinkwässern. In dieser Schrift werden auch zahlreiche andere bekannte Verfahren und anthrazitische Massen referiert. So sei z. B. aus der CH-PS 272 838 bekannt, anthrazitische Kohle zu zerkleinern, die so gewonnene Mischung mit einem Bindemittel zu versetzen und zu formen und die Formkörper zu verkoken.

Den bekannten Verfahren ist gemeinsam, daß bei ihnen eine anthrazitische Kohle einem Brikettierverfahren unterworfen wird, wobei jedoch die Eigenschaften der Produkte deutlich hinter den Möglichkeiten der anthrazitischen Kohle zurückbleiben.

Auf der anderen Seite ist bekannt, daß verkohlte organische Massen, wie Holzkohle, verkohlte Biomassen, Torfkoks und Gemische davon ebenfalls eine sehr große aktive Oberfläche aufweisen und im Prinzip eine hochwertige Kohle darstellen. Sowohl bei den verkohlten organischen Massen, als auch bei Anthraziten fällt ein hoher Prozentsatz an staubförmigen Produkten an, insbesondere durch die Zunahme der mechanischen Gewinnungsmethoden im Bergbau im Bereiche der Anthrazitgewinnung.

Der Erfindung liegt nun die Aufgabe zugrunde, reaktive, kohlenstoffreiche Massen und Körper mit den Grundstoffen "anthrazitische Kohle", worunter in erster Linie Anthrazit verstanden wird, und verkohlten Biomassen, in erster Linie Torfkoks, zu schaffen, die in Bezug auf definierte Eigenschaften, z. B. Adsorptionsfähigkeit bei Filtermassen und Reaktivität, genau einstellbar sind und deshalb besser sind als die Ausgangsstoffe. Die Oberflächen sollen sich durch das Verfahren vergrößern, der elektrische Widerstand und die Reaktionsfähigkeit insgesamt jedoch heraufgesetzt werden.

Eine weitere Aufgabe ist es, die staubförmigen und kleinen Anteile, die bei der Gewinnung von Torfkoks, Holzkohle, der Verkohlung von Stroh und anderen organischen massen, bzw. bei der bergmännischen Gewinnung anthrazitischer Kohle anfallen, in höherwertige Produkte zu überführen, wobei das Endprodukt ein hochwertiger, vielseitig verwendbarer Industriekohlenstoff sein soll.

Diese Aufgabe wird gelöst durch ein Verfahren der eingangs genannten Art, bei dem eine Ausgangsmasse, bestehend aus

a) einem Anteil von 40 - 99 Gew.-% anthrazitischer Steinkohle mit einem Gewichtsgehalt an flüchtigen Bestandteilen (waf) $\leq$ 12 %,

b) einem Anteil von 1 - 60 Gew.-% an Torfkoks, gegebenenfalls bis zur Hälfte des Gewichtes vermischt mit anderen verkohlten organischen Massen, eingesetzt wird, wobei die vorstehenden Anteile mit einem Bindemittel in einem für die gewünschte Konsistenz erforderlichen Anteil versetzt werden.

Die Ausgangsmasse wird vermischt und vermahlen und in eine pelletisierte, brikettierte oder dem Verwendungszweck anderweitig angepaßte Form gebracht.

Dabei können an sich bekannte Brikettierverfahren angewandt werden, wie sie beispielsweise für das Brikettieren von Rohbraunkohle bekannt sind. Im einfachsten Falle, nämlich dann, wenn das Produkt beispielsweise nur als Kohlenstofflieferant in einem unter Hitzeentwicklung stattfindenen Verfahren verwendet wird, können die "grünen" Preßlinge auch in ungegarter oder unverschwelter Form verwendet werden.

Der unter b) genannte Torfkoks wird aus Schwarztorf durch bekannte Verkokungstechnik gewonnen (vergleiche Sonderdruck aus der Werkzeitschrift "Unser Betrieb" - 3/76 und 4/76 - der Firma C. Deilmann AG, Bad Bentheim (Titel: Der Rohstoff Torf und seine zeitgemäße Verwendung als hochwertiger, aschearmer Industriekohlenstoff Torfkoks", Verfasser: Dr. H. Grumpelt)). Die Torfverkokung ist wie jedes Verkokungsverfahren ein Vorgang zur Aufspaltung der Kohlenwasserstoffe im Torf in verbleibenden Kohlenstoff und die flüchtigen Bestandteile. Es handelt sich also um eine Pyrolyse. Im Verlaufe des Verkokungsprozesses wird aus Brenntorf (Schwarztorf) mit einem Heizwert von rund 4000 kcal/kg ein hochwertiges Kohlenstoffkonzentrat von über 7500 kcal/kg und einem niedrigen Gehalt an flüchtigen Bestandteilen. Dabei sind Temperaturen bis zu 850$^{\text{o}}$ erforderlich, um in 12 - 16 Stunden den Kohlenstoffgehalt des Einsatzmaterials auf über 90 Gew.-% im Torfkoks anzureichern. Torfkoks besteht im allgemeinen zu überwiegend 90 Gew.-% aus Kohlenstoff einer amorphen Abart des Graphits. Die Zusammensetzung des Torfkoks schwankt in sehr engen Grenzen. Er besitzt einen niedrigen Asche-, Schwefel- und Phosphorgehalt. Insbesondere durch die Verwendung von Torfkoks lassen sich die Eigenschaften des Anthrazits gemäß der eingangs gestellten Aufgabenstellung in überraschender Weise verbessern.

Neben Torfkoks sind noch andere verkohlte organische Massen, z. B. Holzkohle, verwendbar.

Im allgemeinen werden Holzkohle und Torfkoks, je nach Vorhandensein und gewünschten Eigenschaften, in einer Mischung zusammen in die Ausgangsmasse eingebracht. Weitere, anwendbare organische Massen sind z. B. verkohltes Stroh, verkohlte Haselnuß- oder Kokosnußschalen, verkohltes, ausgelaugtes Zuckerrohr und dergleichen.
Allen diesen Kohlen ist ein sehr lockeres, brüchiges
Kohlenstoff-Gerüst mit hoher spezifischer Oberfläche
gemeinsam.

Als Bindemittel können die aus der Brikettierung bekannten Bindemittel Bitumen und Steinkohlenteerpech verwendet werden. Unter Bitumen werden die in DIN 52 128/29
und 55 946 definierten klebenden, zähen, hochmolekularen, kolloidalen Kohlenwasserstoffe verstanden, die als
natürliche und künstliche Abdunstungsreste von Erdölen
entstehen. Unter Steinkohlenteerpech werden die Rückstände bei der Steinkohlendestillation verstanden, deren
Siedepunkt oberhalb 400$^{\mathrm{o}}$C liegt.

Insbesondere dann, wenn als Bindemittel Bitumen oder
Steinkohlenteerpech verwendet wird, werden bei dem Verfahren die Feststoff-Anteile der Ausgangsmasse mit einem
derartigen Bindemittel in einen flüssigen Zustand versetzt, gegebenenfalls vermahlen und gemischt und in
einer pelletisierten, brikettierten oder dem Verwendungszweck anderweitig angepaßten Form einem Garungsprozeß (Verschwelung) zum Zwecke gänzlicher oder teilweiser Austreibung der flüchtigen Bestandteile unterworfen. In diesem Falle wird das Kohlenstoffgerüst besonders feinporig, ohne daß es die unerwünschte Brüchigkeit
der verkohlten organischen Massen aufweist.

Insbesondere wird das Verfahren mit Anthrazit eingesetzt, wie er aus den tiefen Flözen des Ibbenbürener
Feldes gewonnen wird. Es handelt sich um einen Anthrazit
mit einem C-Gehalt über 90 Gew.-% (waf) und einem Gehalt
an Flüchtigen $\leq$ 10 Gew.-% (waf), bei dem der Schwefelgehalt $\leq$ 2 Gew.-% beträgt.

Neben den Bindemitteln Bitumen und Steinkohlenteerpech,
wie sie aus der "klassischen" Brikettierung bekannt sind, können auch andere Bindemittel mit klebenden Eigenschaften verwendet werden, z. B. Sulfitablauge, mit einem Anteil von bis zu 20 Gew.-% in der Ausgangsmasse. Sulfitablauge entsteht bei der Gewinnung von Zellstoff aus Holz nach dem Sulfit-Verfahren und fällt als Ablauge an. In ihr sind verschiedene Zuckerarten enthalten, die verklebend wirken. Die gewonnenen, gegarten Formlinge können nochmals gebrochen oder vermahlen werden, um eine bestimmte Stückelung zu erreichen.

Vorzugsweise erfolgt die Garung bzw. Verschwelung der Formlinge bei einer Temperatur von 750 - 950 $^{\circ}$C über eine Zeit zwischen 30 bis 120 Minuten in einer inerten Atmosphäre. Inert heißt in diesem Falle, daß das Atmosphärengas praktisch sauerstofffrei ist und damit keine Verbrennung unterhalten kann.

Insbesondere soll als erfindungswesentlich herausgestellt werden, daß sich das Verfahren dazu eignet, kohlenstoffreiche Massen oder Formlinge herzustellen, die verschiedenen, in den Unteransprüchen 9 bis 12 spezifizierten Verwendungszwecken zugeführt werden. Auf den Inhalt dieser Unteransprüche wird in den Beispielen Bezug genommen.

Zur Erläuterung des Verfahrensganges ist eine Z e i c h n u n g beigefügt, die in schematischer Übersicht ein Verfahrensdiagramm zeigt.

Dargestellt ist die Anthrazit-Torfkoks-Formling-Herstellung. Wie aber für den Fachmann ohne weiteres erkennbar ist, läßt sich im Rahmen der Ansprüche das Verfahren auch durch äquivalente technische Vorrichtungen lösen.

Für die Durchführung des Verfahrens werden die Komponenten in drei getrennten Behältern vorrätig gehalten. Die drei Vorratsbehälter 1, 2 und 3 sind für folgende Kompo-

nenten bestimmt:

Nr. 1: Torfkoks, eventuell gemischt mit Holzkohlenstücken, Abrieb von Holzkohle, verkohltes Stroh
und dergleichen, verkohlte organische Massen,
letztere bis zu einem Anteil von üblicherweise
höchstens 50 Gew.-%;

Nr. 2: Bindemittel, z. B. Bitumen oder Steinkohleteerpech;

Nr. 3: Anthrazit in einer Stückelung von $\leq$ 10 mm (Sieb-
Maschenweite).

Der Behälter Nr. 2 kann üblicherweise beheizt werden
oder ist mit einem beheizbaren Tagesbehälter versehen.
Der Behälter soll deshalb beheizbar sein, damit das
Bindemittel bei einer Temperatur von 40 bis 80$^{\circ}$ flüssig
gehalten sein kann.

Über die dargestellten drei Zuleitungen von den Behältern 1 bis 3 werden die Komponenten, beispielsweise über
eine beheizbare Förderschnecke, einem Mischer und Kneter
4 zugeführt, der ebenfalls als Schneckenpresse beheizbar
gestaltet sein kann. Die Komponenten werden innig und
homogen gemischt und dabei auf einer Temperatur zwischen
40 und 80$^{\circ}$ C gehalten, um das Bindemittel nicht fest
werden zu lassen. Die Beheizung erfolgt über einen Wärmetauscher 14, der mit Rauchgas beschickt wird, wie
weiter unten beschrieben werden wird. Nach dem Mischen
und Kneten wird die hochviskose Masse in einer Presse
4', die beispielsweise eine Strangpresse oder eine Walzenpresse mit Matrizenwalze sein kann, zu einzelnen
Formlingen geformt. Diese Formlinge, die Pellets, Briketts oder zylindrische Abschnitte sein können, werden
in der bekannten Technik, wie sie aus der Brikettierung
von Braunkohlenbriketts bekannt ist, hergestellt. Die

8

aus der Presse kommenden Preßlinge werden als "grüne Preßlinge" bezeichnet. Sie haben beispielsweise eine Länge von 5 - 30 mm. Noch im warmem Zustand werden sie mit Hilfe eines Kratzförderers in den Drehrohrofen 5 über eine gasdichte Schleuse eingeführt. In dem Drehrohrofen 5 wird eine inerte, weitgehend sauerstofffreie Atmosphäre eingehalten. Die Temperatur im Drehrohr beträgt während des Verschwelungs- und Garungsprozesses 800 - 900$^{o}$ C. Je nach den geforderten Ergebnissen kann diese Temperatur auch über- und unterschritten werden. Das Drehrohr macht ein bis zwei Umdrehungen pro Minute. Die Verweilzeit der Preßlinge in dem Drehrohrofen 5 beträgt etwa 1 - 2 Stunden. Auch diese Werte können variiert werden.

Die Preßlinge und Formlinge sollen möglichst schonend geschwelt und gegart werden. Das Drehrohr kann direkt und/oder indirekt beheizt werden. Für die direkte Beheizung, wie im vorliegenden Falle gewählt, ist ein Schwelgasbrenner 9 vorgesehen, der sowohl mit Schwelgas als auch - zum Anheizen - mit Propan geheizt werden kann. Das beim Schwelen beim Drehrohr 5 entstehende Schwelgas wird abgezogen und über die Leitung 10 dem Schwelgasbrenner 9 zugeführt. nach dem Anheizen ist demnach eine weitere Energiezufuhr für den Drehrohrofen nicht erforderlich.

Selbstverständlich muß dafür gesorgt werden, daß das Schwelgas vollständig abgebrannt wird. Für den Fall, daß ein Überschuß an Schwelgas entsteht, wird dieser abgeführt und anderweitig verbrannt. Zu berücksichtigen ist, daß gemäß den einschlägigen Vorschriften (TA Luft) das Schwelgas vollständig verbrannt sein muß, bevor es in die Atmosphäre als Rauchgas eintreten darf.

Die nach dem Schwelvorgang dem Drehrohrofen wiederum über eine gasdichte Schleuse zu entnehmenden Preßlinge haben eine sehr poröse und oberflächenreine Struktur.
Sie sind gegenüber den "grünen Preßlingen" nur wenig
geschrumpft. Im allgemeinen wird eine pelletisierte oder
brikettierte Form mit einer äußeren Abmessung zwischen 5
und 25 mm bei einer Dicke zwischen 5 - 20 mm angestrebt.
Die Pellets haben dabei etwa die Form von sogenannten
Nußbriketts oder von zylindrischen Abschnitten, zum Teil
mit für die Anwendung vorteilhaften Bruchkanten.

Die dem Drehrohr entnommenen Pellets werden in eine
Nachkühlungsstation 6 transportiert. Diese besteht aus
einer Bandkühlstrecke, die von Kühlluft durchspült wird
und auf der die Produkte auf die Umgebungsluft-Temperatur (20 - 30$^o$ C) abgekühlt werden. Der kühllufterzeugende Ventilator ist mit 16 bezeichnet. Die bei der Durchspülung entstehende Warmluft wird über eine Luftleitung
13 zur Rohstof-Vorwärmung wieder verwendet, wobei die
Wärme in einem Wärmetauscher 14, wie eingangs genannt,
abgegeben wird. Die Energieverluste können dadurch
äußerst gering gehalten werden.

Nach Abkühlung der Produkte werden diese mit Hilfe einer
Transportvorrichtung, z. B. Bandfördervorrichtung, von
der Kühlstation 6 zur Siebstation 7 weitergefördert. In
der Siebstation 7 erfolgt die Abtrennung des Unterkorns
und die Rückführung dieses Unterkorns in den Anthrazitbunker 3, da dieses Material sehr kohlenstoffreich ist
und dem Anthrazit-Unterkorn-Staub ohne weiteres beigemischt werden kann.

Das Unterkorn kann jedoch auch für sich einer Abpackstation zugeführt werden, da es sich für bestimmte Anwendungszwecke (Zuführung von Kohlenstoff) eignet.

Nach der entsprechenden Klassierung in der Siebstation 7
werden die gestückelten Produkte abgefüllt und verschiedenen Verwendungszwecken zugeführt.

Anstelle des Drehrohrofens kann auch ein aufwendigerer Bandschweler eingesetzt werden. Es ist auch möglich, ausgekleidete Schachtöfen einzusetzen, wie diese bei der Erzeugung von Torfkoks bekannt sind.

Die Anwendung des gewonnenen Produkts wird in den nachfolgenden Beispielen erläutert. Stückigkeit und spezifische Oberfläche können anhand der Mischungsverhältnisse und der Wahl der Ausgangsstoffe und der Bindemittel variiert werden. Das Produkt kann in der Chemie und Komunalwirtschaft verwendet werden, beispielsweise zur Herstellung von Schwefel-Kohlenstoff, zur Abwasser- und Gasreinigung und zur Herstellung medizinischer Kohlen. Es kann zur Frischwasser-Reinigung, zur Rauchgasreinigung, als Katalysatorträger, als Entfärbungskohle oder als Gasadsorptionskohle verwendet werden. Das Material ist ferner als Schleifmittel oder auch in der keramischen Industrie als Färbemittel oder Brennstoff verwendbar. Auch in der elektro-thermischen Metallurgie, und zwar zur Reduzierung oder zur Herstellung von Karbiden, kann es verwendet werden. Weitere Anwendungsgebiete sind die Metallurgie, die Gießerei, die Härterei, die Kupferrafination, das Schmieden, die Drahtindustrie und als Aufkohlungsmaterial bei anderen metallurgischen Einsatzgebieten.

Im folgenden werden einige spezifische Beispiele erläutert, die erfindungswesentliche Anwendungen des Materials zeigen, und die Verfahrensschritte zu ihrer Herstellung. Alle im folgenden genannten Teile, Anteile und Prozente beziehen sich jeweils auf das Gewicht.

Beispiel 1

Für die Herstellung eines kohlenstoffreichen Filtermaterials für Abwasser werden für 100 Teile der Ausgangsmasse 50 Teile Anthrazit (Ibbenbürener Anthrazit - Lagerstätte aus dem sogenannten Karbon-Horst) eingesetzt; der Flüchtigen-Gehalt (waf) beträgt 5,0 %, der Kohlenstoffgehalt beträgt 91,5 %, mit den naturstoffüblichen Schwankungen. Das Material wird auf eine Korngröße kleiner gleich 8 mm gemahlen und gesiebt. Das Material enthält demnach auch sehr feine Anteile, auch Kohlenstaub. Zu diesen Teilen werden 30 Teile Torfkoks hinzugefügt, gewonnen nach dem eingangs genannten Verfahren, beschrieben bei GRUMPELT a. a. O., ebenfalls gemahlen und gesiebt auf eine Korngröße $\leq$ 8 mm. Diesen Komponenten werden 20 Teile Bitumen, Siedepunkt oberhalb 400$^{\circ}$ C, Erweichungspunkt 40$^{\circ}$ C, hinzugefügt. Das ganze wird in einem Kneter/Mischer bei 50$^{\circ}$ bis zur Homogenität gemischt und in Pellets von 25 mm Durchmesser gepreßt. Anschließend wird es im Drehrohrofen bei 850 - 900$^{\circ}$ C geschwelt und gegart.

Nach Abkühlung erhält man Pellets mit vergrößerter Oberfläche und gutem Filterverhalten.

Beispiel 2

Es wird die Verfahrensweise wie bei Beispiel 1 gewählt, jedoch werden für 100 Teile Ausgangsmasse 60 Teile Anthrazit, 20 Teile Torfkoks und 10 Teile Buchenholzkohle, alles zerkleinert auf Teile $\leq$ 5 mm Durchmesser, verwendet. Als Bindemittel werden 10 Teile eingedickte Sulfit-Ablauge verwendet. Das Mischen erfolgt bei 20$^{\circ}$ C, das Brikettieren bei etwa 40$^{\circ}$ C und das Garen und Schwelen bei 800$^{\circ}$ C. Die gewonnenen, kleinstückigen Pellets mit 20 - 30 mm Durchmesser können als Filtermaterial für die Flüssigkeitsläuterung verwendet werden.

Beispiel 3

Auch hier wird die Verfahrensweise wie im Beispiel 1 gewählt, jedoch besteht die Ausgangsmasse aus 80 Teilen Magerkohle (C-Gehalt 90 % (waf), Flüchtige (waf) $\leq$ 12 %) aus 5 Teilen Torfkoks, 2 Teilen Kieferntannenholzkohle und 2 Teilen verkohltem Roggenstroh. Dem kleinstückigen Gemisch werden 11 Teile Steinkohlenteerpech als Bindemittel bei 50° C hinzugefügt. Das Mischen erfolgt bei 52° C. Es werden mit Hilfe einer Strangpresse zylindrische Stäbe der Abschnittslänge 50 mm bei 10 mm Durchmesser gepreßt. Die Garung und Verschwelung erfolgt bei 800 - 900° C im Drehrohrofen über eine Zeit von 1,5 Stunden.

Die Formlinge weisen eine große Oberfläche auf und können als Abgasfilter für die Kaffee-Rösterei verwendet werden.

Beispiel 4

Für die Herstellung eines kohlenstoffreichen Aufkohlungsmaterials für die Metallurgie wird eine geringe Festigkeit des Materials benötigt, d. h. der Anthrazitgehalt kann erheblich gesteigert werden. Als Bindemittel ist ein hochwertiges, reines Material erforderlich.

Die Zusammensetzung von 100 Teilen Ausgangsmasse ist: 90 Teile Anthrazit (Ibbenbürener Anthrazit, wie bei Beispiel 1), 2,5 Teile Torfkoks, 2,5 Teile Birkenholzkohle, alles zerkleinert auf eine Stückelung $\leq$ 5 mm Durchmesser. Die Mischung erfolgt mit 5 Teilen Steinkohlenteerpech (Siedepunkt größer als 500° C) bei 60° C. Es werden Pellets von 5 mm Durchmesser und 4 mm Dicke gepreßt. Die Verschwelung und Garung erfolgt in einem Drehrohrofen bei 800 - 900° C über eine Zeit von 120 Minuten. Das Material wird als Aufkohlungsmittel in der Stahlindustrie verwendet. Es besitzt einen niedrigen Aschengehalt, einen niedrigen Schwefelgehalt und ein schnelles Auflösungsvermögen.

Die Anteile können variiert werden, wobei in Unteranspruch 10 Variationsbreiten und andere Mischungen angegeben sind.

Beispiel 5

Für die Herstellung von kohlenstoffreichen Reduktionsmaterialien für die Herstellung von technisch reinem Silizium im Niederschachtofen ist eine besonders hohe Festigkeit der Formlinge notwendig. Daher sind nur hochwertige Bindemittel, wie Bitumen oder Steinkohlenteerpech, geeignet.

Beispielsweise können 100 Teile Ausgangsmasse wie folgt zusammengesetzt sein:

70 Teile Anthrazit des Ibbenbürener Feldes gemäß Anspruch 1, 10 Teile Torfkoks, 5 Teile Tannen/Kiefer-Holzkohle, alle Teile gestückelt unter 8 mm Maschenweite. Es erfolgt ein Mahlen und Mischen mit 10 Teilen Bitumen und 5 Teilen Steinkohlenteerpech bei $80^\circ$ C. Anschließend werden kleine Briketts mit einem "grünen" Gewicht von 120 g hergestellt, die bei $750 - 890^\circ$ C geschwelt und gegart werden.

Die Briketts können noch gebrochen werden, falls dies für die Verwendungszwecke erforderlich ist.

In ähnlicher Weise können auch Kohlenelektroden oder Kohlenstoffblöcke hergestellt werden.

Variationsbreiten sind in Unteranspruch 11 definiert.

Beispiel 6

Reaktives, kohlenstoffreiches Material für die Silizium-Karbid-Herstellung erfordert nur ein geringwertiges

14

Bindemittel, z. B. verunreinigte Sulfit-Ablauge. Die Formmassen brauchen nicht einmal gegart zu werden, sondern können in der kalt brikettierten Form weiterverwendet werden. Zusammensetzung von 100 Teilen Ausgangsmasse:

Anthrazit (Sophia Jacoba bzw. Niederberg) mit 91 % Kohlenstoff, 8 % flüchtigen Bestandteilen (waf);
Torfkoks 10 Teile,
verkohlte Holz-Abfälle (Sägemehl) 5 Teile,
Sulfitablauge 15 Teile.
Es erfolgt ein Mischen und Mahlen bei Zimmertemperatur, d. h. 25 - 30° C. Die Masse wird in Quaderform verpreßt, wobei die Quader eine Größe von 5 x 5 x 25 mm haben. Die Herstellung erfolgt mit einer Strangpresse.

Die Anteile und Stoffe können variiert werden, wie dies in Unteranspruch 12 beschrieben ist.

Insgesamt lassen sich die reaktiven, kohlenstoffreichen Massen und Formlinge, wie sie gemäß dem beschriebenen Verfahren hergestellt werden, für mannigfaltige Verwendungszwecke einsetzen. Die in den vorstehend genannten Beispielen erläuterten Ausführungsbeispiele werden als erfindungswesentlich angesehen.

0138100

A1

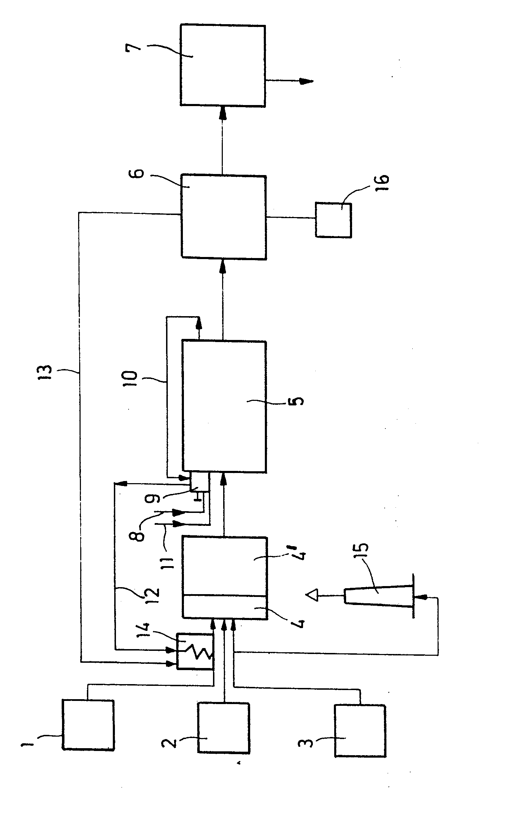

Patentansprüche:

1. Verfahren zur Herstellung reaktiver, kohlenstoffreicher Massen oder Körper, bei dem eine Ausgangsmasse, die zu einem wesentlichen Teil aus anthrazitischer Steinkohle besteht, unter Beimischung eines Bindemittels vermischt und vermahlen wird und in eine dem Verwendungszweck angepaßte Form gebracht wird, dadurch gekennzeichnet, daß eine Ausgangsmasse, bestehend

a) aus einem Anteil von 40 - 99 Gew.-% anthrazitischer Steinkohle mit einem Gewichtsgehalt an flüchtigen Bestandteilen (waf) $\leq$ 12 %,

b) aus einem Anteil von 1 - 60 Gew.-% an Torfkoks, gegebenenfalls bis zur Hälfte des Gewichts vermischt mit anderen verkohlten organischen Massen, eingesetzt wird, wobei die vorstehenden Anteile mit einem Bindemittel in einem für die gewünschte Konsistenz erforderlichen Anteil versetzt werden.

2. Verfahren nach Anspruch 1, bei dem die Feststoffanteile der Ausgangsmasse mit einem verschwelbaren Bindemittel in verfestigten Zustand versetzt, gegebenenfalls vermahlen und gemischt werden und in der dem Verwendungszweck angepaßten Form einem Garungsprozeß zum Zwecke gänzlicher oder teilweiser Austreibung der flüchtigen Bestandteile unterworfen werden.

3. Verfahren nach Anspruch 1 oder 2, dadurch gekennzeichnet, daß als anthrazitische Kohle ein Anthrazit mit einem C-Gehalt über 90 Gew.-% (waf) und/oder einem Gehalt an flüchtigen Bestandteilen $\leq$ 10 Gew.-% (waf) verwendet wird, bei dem der Schwefelgehalt $\leq$ 2 Gew.-% (waf) beträgt.

0138100

4. Verfahren nach Anspruch 1 bis 3, dadurch gekennzeichnet, daß als Bindemittel Sulfitablauge eingesetzt wird.

5. Verfahren nach Anspruch 1 bis 3, dadurch gekennzeichnet, daß als Bindemittel Steinkohlenteerpech eingesetzt wird.

6. Verfahren nach Anspruch 1 bis 3, dadurch gekennzeichnet, daß als Bindemittel Bitumen eingesetzt wird.

7. Verfahren nach Anspruch 2 bis 4, dadurch gekennzeichnet, daß die gewonnenen, gegarten Formlinge gebrochen und/oder vermahlen werden.

8. Verfahren nach Anspruch 1, dadurch gekennzeichnet, daß die Garung der Formlinge bei einer Temperatur von 750 - 950 $^o$ C in einer Zeit zwischen 30 und 120 Minuten in einer inerten Atmoshäre erfolgt.

9. Verwendung der gemäß den Ansprüchen 1 bis 8 aus einer Ausgangsmasse, bestehend (einschl. Bindemittel):
a) aus einem Anteil von 60 - 80 Gew.-% Anthrazit mit einem Gewichts-Anteil (waf) an flüchtigen Bestandteilen unter 8 % und einem C-Gehalt von 90 - 93,5 Gew.-% (waf);
b) aus einem Anteil von 8 - 15 Gew.-% Torfkoks, versetzt mit 0 - 3 Gew.-% (bezogen auf die Ausgangsmasse) Holzkohle oder verkohlter Biomasse;
c) einem Anteil von bis zu 15 Gew.-% Bitumen oder Steinkohlenteerpech als Bindmittel, hergestellten und zu Pellets mit einer Korngröße zwischen 5 und 25 mm verpreßten, gegarten oder als gegarte Pellets oder Briketts gebrochenen und in Brocken der entsprechenden Korngröße ausgesiebten reaktiven, kohlenstoffhaltigen Körpern zum Einsatz als Filtermaterial.

10. Verwendung der **gemäß** den Ansprüchen 1 bis 8 aus einer Ausgangsmasse, bestehend aus

a) einem Anteil von 80 - 95 Gew.-% Anthrazit oder Magerkohle mit einem Gewichts-Anteil (waf) an flüchtigen Bestandteilen unter 12 % und einem C-Gehalt zwischen 90 und 92 Gew.-% (waf),

b) einem Anteil von bis zu 5 Gew.-% Torfkoks, gegebenenfalls vermischt mit Holzkohle und/oder verkohlter Biomasse,

c) einem Anteil von 4 - 6 Gew.-% Steinkohlenteerpech oder Bitumen als **B**indemittel, hergestellten,

die zu Pellets geformt und gegart, die anschließend zu einem schüttführigem Material gebrochen, gemahlt oder gesiebt wird, zum Einsatz als Aufkohlungsmaterial für die Metallurgie.

11. Verwendung der gemäß den Ansprüchen 1 bis 8 aus einer Ausgangsmasse, bestehend (einschl. Bindemittel) aus:

a) einem Anteil von 65 - 75 % Anthrazit mit einem Gewichts-Anteil (waf) an flüchtigen Bestandteilen unter 8 % und einem C-Gehlat von 91 - 93,5 Gew.-% (waf),

b) einem Anteil von 4 - 7 Gew.-% Torfkoks, versetzt mit 0 - 3 Gew.-% (bezogen auf die Ausgangsmasse) Holzkohle oder verkohlter Biomasse,

c) einem Anteil von bis zu 6 Gew.-% Bitumen oder Steinkohlenteerpech als Bindemittel, hergestellten,

die zu Pellets verpreßt und anschließend gegart wird, wobei gegebenenfalls die gegarten Pellets gebrochen werden, zum Einsatz als kohlenstoffreiches Reduktionsmaterial für die Herstellung von technisch reinem Silizium.

12. Verwendung der gemäß den Ansprüchen 1 bis 8 aus einer Ausgangsmasse, bestehend (einschl. Bindemittel) aus

a) Anthrazit- oder Magerkohle mit einem Gewichtsanteil (waf) an flüchtigen Bestandteilen unter 12 %

A4

und einem C-Gehalt zwischen 90 und 92 Gew.-%,

b) 12 - 18 Gew.-% Torfkoks, gegebenenfalls versetzt mit anderen organischen Massen bis zur Hälfte des Anteils;

c) als Bindemittel Sulfitablauge mit einem Gehalt von 10 - 12 Gew.-%,

die zu einem verpreßbaren, hochviskosen Strang verarbeitet wird, aus dem in der Strangpresse Preßlinge geeigneter Größe geformt, diese gekühlt und nachgetrocknet werden, zum Einsatz als reaktives, kohlenstoffreiches Material für die Karbidherstellung.